# EUROPÄISCHE PATENTANMELDUNG

(11) **EP 2 452 852 A2**
(43) Veröffentlichungstag der Anmeldung: **16.05.2012**
(21) Anmeldenummer: 11466035.0
(22) Anmeldetag: 27.10.2011
(51) Int. Cl.: B60N 3/10

(54) **Schwenkbarer Flaschenhalter**

(30) Priorität: 11.11.2010 CZ 20100820
(71) Anmelder: Skoda Auto a.s., 293 60 Mladá Boleslav (CZ)
(72) Erfinder: Velíková, Katerina, Mladá Boleslav 29301 (CZ); Martin, Sedivý, Pardubice 53003 (CZ)

(57) **Zusammenfassung**

Ein schwenkbarer Halter (1) einer Flasche (8) im Fahrzeug ist im Fahrgastraum zwischen dem Vordersitz (9) und dem Fußbereich am vorderen Abschnitt des Mitteltunnels (12) des Fahrzeuges angeordnet. Der Halter (1) der Flasche (8) ist in einer Mulde (11) des Sitzes (10) befestigt und dient zum Abstellen und Halten von Trinkflaschen für den Bedarf der Fahrzeuginsassen. Die Erfindung liegt darin, dass der Halter (1) der Flasche (10) einen Schenkel (3) umfasst, der mit einem Ende in einer Mulde (11) des Sitzes (10) befestigt ist und an der gegenüberliegenden Stelle eine Lagerung (4) aufweist. Der Halter (1) der Flasche (10) umfasst weiter eine ringförmige Schelle (4) in Form des C-Buchstabens mit einem Bolzen (5). An dem Schenkel (3) ist eine Lagerung (4) ausgebildet, welche dem schwenkbaren Halten des Bolzens (5) in der Lagerung (4) dient. An der Schelle (6) des Halters (1) ist ein Eintrittsspalt (7) für die Aufnahme der Flasche (8) ausgebildet.

## Beschreibung

### Technisches Gebiet

Die Erfindung betrifft einen schwenkbaren Flaschenhalter, der im Fahrgastraum zwischen dem Sitz und dem vorderen Abschnitt des Mitteltunnels im Fußbereich des Nutzers angeordnet und an der Sitzmulde befestigt ist, wobei der Flaschenhalter zum Abstellen und Halten von Trinkflaschen oder beliebigen Gefäße für den Bedarf der Fahrzeuginsassen dient.

### Bisheriger Stand der Technik

Für die Befestigung verschiedener Flaschen und flaschenförmiger Gefäße im Fahrer- und Beifahrerbereich werden geläufig verschiedene Halterungen und komplizierte Befestigungssysteme verwendet. Diese Halterungen sind in überwiegender Mehrheit an der Schalttafel oder am Mitteltunnel zwischen dem Fahrer und dem Beifahrer angeordnet. Dokument DE10223404A1 beschreibt eine Haltevorrichtung für die Befestigung eines Trinkgefäßes im Fahrgastraum zwischen dem Fahrer- und Beifahrersitz, das beliebig an der Mittelkonsole im Abschnitt zwischen der Schalttafel und den Fondsitzen befestigt werden kann. Zum Mitteltunnel ist in diesem Abschnitt ein Verbindungsteil befestigt, auf dem senkrecht zur Vertikale der Flaschenhalter frei aufgesetzt ist. Dieser Verbindungsteil kann auch zur Vorderseite des Fahrer- sowie Beifahrersitzrahmens im Fußbereich befestigt werden. Der Verbindungsteil umfasst eine ringförmige Aufnahme. Der Flaschenhalter umfasst einen Haltearm, auf dem ein ausfahrbarer Bolzen befestigt ist. Die eigentliche Verbindung des Flaschenhalters mit dem Verbindungsteil ist derart ausgeführt, dass der ausfahrbare Bolzen des Flaschenhalters in die ringförmige Aufnahme des Verbindungsteils eingesteckt wird.

Im Dokument DE20213079U1 ist ein Flaschenhalter beschrieben, der am Fahrer- oder Beifahrersitz angeordnet und an beliebiger Stelle der unteren Sitzverkleidung befestigt werden kann. Es handelt sich um einen geschlossenen oder offenen rohrförmigen Halter mit einem Basisteil und mit verschiedenen zusätzlichen in den Halter einsetzbaren Einbauelementen, der im Auto an der Sitzverkleidung neben dem Mitteltunnel oder an vielen anderen Stellen befestigt werden kann und zum Abstellen unterschiedlicher Flaschen und flaschenähnlichen Behälter dient. Der Halter ist rohrförmig mit einer Länge von ca. 100mm und kann mit oder ohne Boden ausgestaltet sein. Dieser Halter wird am Fahrer- oder Beifahrersitz verschraubt oder durch sonstige Verbindungen befestigt. Somit wird der Halter immer bei der Sitzverstellung mit dem Sitz verschoben und behält damit immer die gleiche Position am Sitz. Der Halter ist in der Ecke zur Mitte des Fahrzeuges seitlich unten neben den Knien des Nutzers angeordnet, wo er nicht störend ist und die Flasche sicher verklemmen kann. Der ringförmige Halter kann auch als Abfallbehälter genutzt werden, wenn in den Ring ein Plastik- oder Papiertüte eingehängt wird. Im DE9408692U1 ist ein aus einem offenen Federring bestehender Flaschenhalter beschrieben, der einen Eintrittsspalt für die Aufnahme eines Getränkebehälters umfasst. An einer dem Eintrittsspalt gegenüberliegenden Stelle ist der Gefäßhalter mit einem Halteteil verbunden. Dieser Halteteil ist als Klipskörper mit zwei federnd aufspreizbaren Schenkeln ausgebildet, der an dem Griffteil der Betätigungsstange der Sitzverstellung befestigt ist. Der Halteteil kann anstelle durch Federkraft auch magnetisch an dem Griffteil der Betätigungsstange verankert sein. Der Nachteil derartiger Lösungen liegt darin, dass durch die Schwingungen während der Fahrt sich die federnden Schenkel des Halteteils oder des magnetischen Halteteils am Umlauf des Griffteils der Betätigungsstange der Sitzverstellung bewegen können und dadurch kann sich auch der im Gefäßhalter abgestellte Getränkebehälter bewegen.

### Darstellung der Erfindung

Die Aufgabe wird mit einem im Fahrgastraum zwischen dem Vordersitz und dem vorderen Abschnitt des Mitteltunnels im Fußbereich der Fahrgäste angeordneten schwenkbaren Flaschenhalter gelöst, der zum Abstellen und Halten von Trinkflaschen den Bedarf der Fahrzeuginsassen dient. Der schwenkbare Flaschenhalter ist zur Sitzmulde befestigt. Die Darstellung der Erfindung liegt darin, dass der Flaschenhalter durch einen Schenkel, der mit einem Ende an der Sitzmulde befestigt ist und am dessen gegenüberliegenden Ende eine Lagerung ausgebildet ist, und eine ringförmige Schelle in Form des C-Buchstaben, die einen Bolzen umfasst, gebildet wird. Die auf dem Schenkel des Halters ausgebildete Lagerung ist derart ausgestaltet, dass der Bolzen der Schelle genau in die Lagerung des Schenkels eingreift und schwenkbar ist. An der Schelle des Halters ist an der dem Bolzen gegenüberliegenden Stelle der Eintrittsspalt für die Flaschenaufnahme ausgebildet, wobei die Größe des Eintrittsspalts kleiner als der Durchmesser der Schelle ist.

Der Halter ist aus einem elastischen Kunststoff ausgebildet und die Flasche entspricht einer handelsüblichen PET-Flasche für Getränke.

### Übersicht der Figuren der Zeichnungen

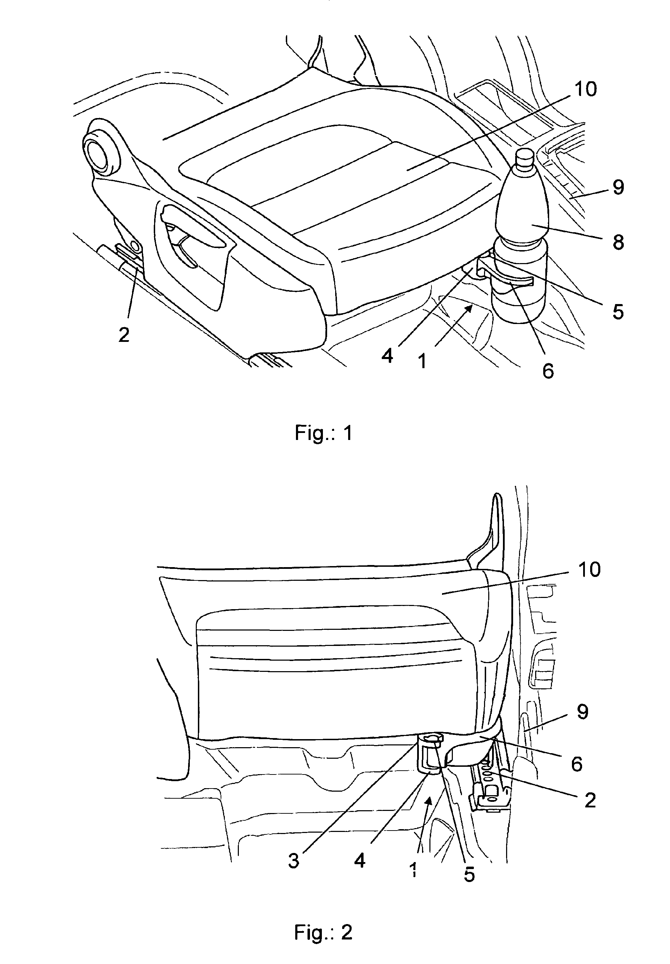

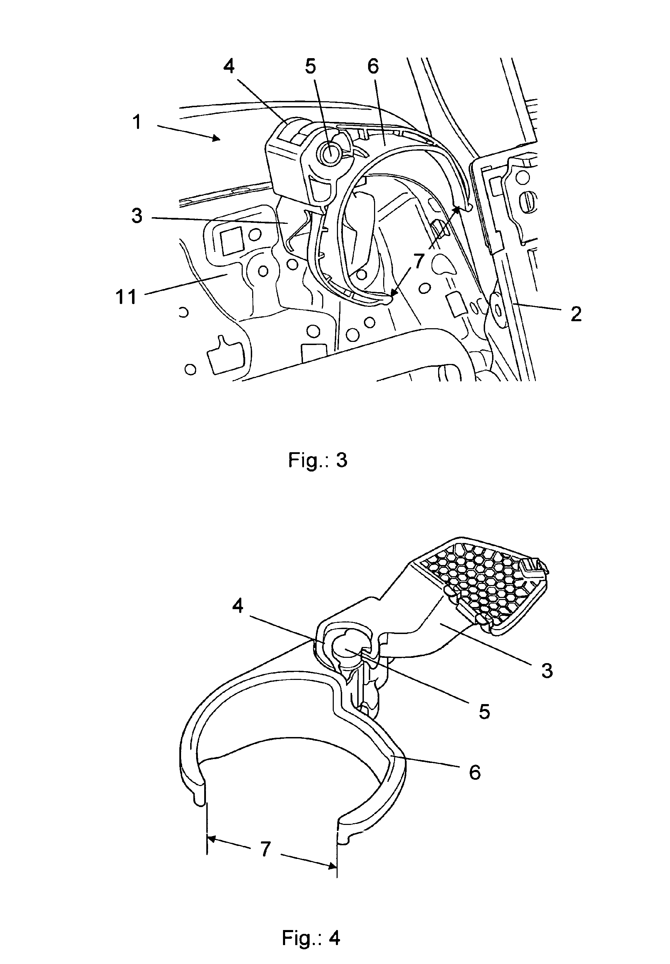

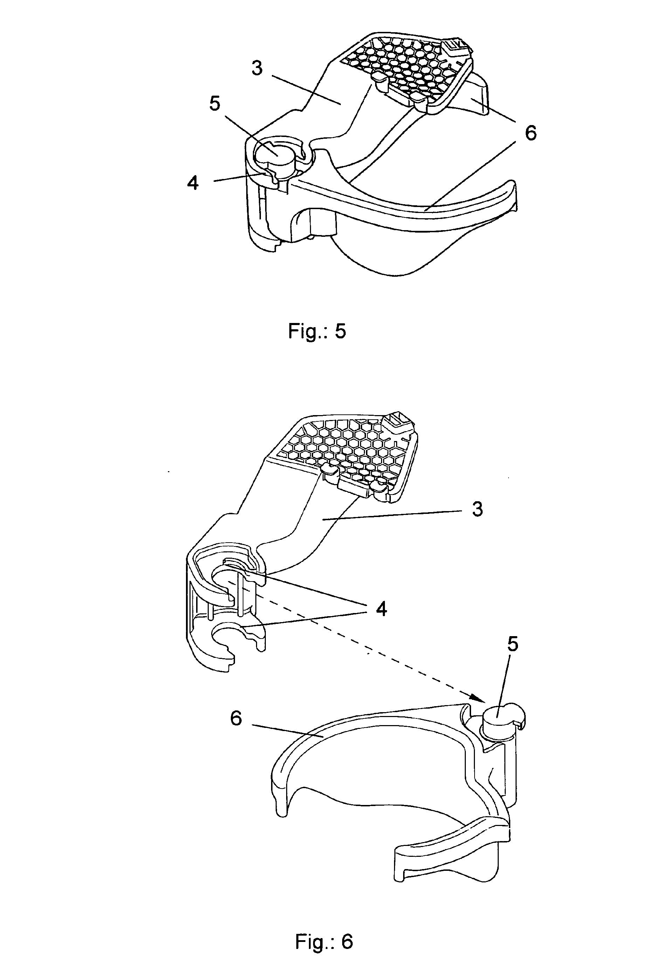

In Fig. 1 ist in einer perspektivischen Gesamtansicht des Raumes zwischen dem Vordersitz und dem Mitteltunnel des Fahrzeuges die Anordnung des erfindungssgemäßen Halters und der Flasche, in Fig. 2 in einer perspektivischen Gesamtansicht des Raumes zwischen dem Vordersitz und dem Mitteltunnel des Fahrzeuges die gleiche Anordnung des Halters in eingeklappter Stellung ohne Flasche, in Fig. 3 in einer Untersicht die Sitzmulde, zu der der klappbarer Flaschenhalter befestigt ist, in Fig. 4 bis 6 in perspektivischen Ansichten nur das Detail des eigentlichen Halters in verschiedenen Positionen dargestellt.

### Ausführungsbeispiel der Erfindung

In Fig. 1 und 2 ist der Raum zwischen dem Vordersitz 10 des Beifahrers und dem Mitteltunnel 9 des Fahrzeuges dargestellt, wo der schwenkbare Halter 1 der Flasche 8 angeordnet ist. Der Halter 1 ist nach Fig. 3 zur Mulde 11 des Sitzes 10 nahe der Führungsbahn 2 der elektrischen Sitzverstellung 10 befestigt. Der Halter 1 der Flasche 8 umfasst nach Fig. 4 bis 6 einen Schenkel 3 und eine ringförmige Schelle 6. Der Schenkel 3 ist mit einem Ende zur Mulde 11 des Sitzes 10 befestigt und weist an der gegenüberliegenden Stelle eine Lagerung 4 auf. Die ringförmige Schelle 6 hat die Form des C-Buchstaben und umfasst einen Bolzen 5, der von oben genau in die Lagerung 4 des Schenkels 3 einsetzt und nach dem Einsetzen dort schwenkbar ist. Die Lagerung 4 ist derart ausgestaltet, dass der Bolzen 5 der Schelle 6 nach dem Einsetzen in die Lagerung 4 dort schwenkbar gehalten wird, d.h. sein Herausfallen aus der Lagerung 4 bei seiner horizontalen Verschwenkung wird verhindert. Die Verschwenkung des Bolzens 5 der Schelle 6 in der Lagerung 4 des Schenkels 3 ermöglicht das Ein- oder Aufklappen der Schelle 6 aus dem Raum unter dem Sitz 10.

Der Durchmesser der Schelle 6 entspricht dem erforderlichen Durchmesser der Flasche 8.

An dem Bolzen 5 ist an der der Schelle 6 des Halters 1 gegenüberliegenden Stelle ein Eintrittsspalt 7 für die Flaschenaufnahme ausgebildet. Die Größe des Eintrittsspalts 7 ist kleiner als der Durchmesser der Schelle 4, damit die Flasche 8 aus dem Halter 1 nicht herausfallen kann. Die Flasche 8 ist elastisch und zusammendrückbar, um über die Verengung der Eintrittsspalt 7 die Flasche 8 in den Halter einsetzen zu können. Die Flasche entspricht einer handelsüblichen PET-Flasche für Getränke.

In der Nichtgebrauchsstellung, d.h. wenn der klappbarer Halter 1 für das Halten der Flasche 8 nicht gebraucht wird, wird der Halter in den Raum unter dem Sitz 10 verschwenkt, damit er im Fußraum des eventuellen Beifahrers nicht störend wirkt. In der Gebrauchsstellung, d.h. wenn der klappbarer Halter 1 für das Halten der Flasche 8 gebraucht wird, wird die schwenkbare Schelle 6 aus dem Raum unter dem Sitz 10 aufgeklappt und in die Schelle 6 die benötigte Flasche 8 eingesetzt.

Durch vertikales Herausnehmen und Einsetzen des Bolzens 5 der Schelle 6 in der Lagerung 4 des Schenkels 3 wird der Austausch unterschiedlicher Schellen mit verschiedenen Durchmessern für die Aufnahme von Flaschen mit verschiedenen Durchmessern ermöglicht.

Die ringförmige Schelle des Halters kann mit unterschiedlichen Durchmessern ausgebildet werden, die jedoch den üblichen PET-Standardflaschen entsprechen, welche standardmäßig für verschiedene Getränke wie Limonaden, Mineralwasser usw. in verschiedenen Volumengrößen (0,51; 1l; 1,5l; 2l usw.) verwendet werden.

### Gewerbliche Anwendbarkeit

Der erfindungsgemäße Flaschenhalter kann in allen Automobilen eingesetzt und vorteilhaft beispielsweise im Fahrgastraum zwischen dem Vordersitz und dem vorderen Abschnitt des Mitteltunnels im Fußbereich der Fahrgäste angeordnet werden.

### Verwendete Bezeichnungen

- 1: Schwenkbarer Flaschenhalter
- 2: Führungsbahn der elektrischen Sitzverstellung
- 3: Schenkel des Halters
- 4: Lagerung am Schenkel
- 5: Bolzen der Schelle
- 6: Schelle
- 7: Eintrittsspalt der Schelle
- 8: Flasche
- 9: Mitteltunnel
- 10: Sitz
- 11: Sitzmulde

## Patentansprüche

1. Ein schwenkbarer Halter (1) der Flasche (8), der im Fahrgastraum zwischen dem Vordersitz (10) und dem Fußraum am vorderen Abschnitt des Mitteltunnels (9) des Fahrzeuges angeordnet ist, wobei der schwenkbare Halter (1) der Flasche (8) zur Mulde (11) des Sitzes (10) befestigt ist und zum Abstellen und Halten von Trinkflaschen für den Bedarf der Fahrzeuginsassen dient, **dadurch gekennzeichnet, dass**
- der Halter (1) der Flasche (8)
einen Schenkel (3), der mit einem Ende zur Mulde (11) des Sitzes (10) befestigt ist und an der gegenüberliegenden Stelle eine Lagerung (4) aufweist,
eine ringförmige Schelle (6) in Form des C-Buchstaben umfasst, die einen Bolzen (5) aufweist,
wobei die Lagerung (4) des Schenkels (3) für die Anordnung und schwenkbares Halten dieses Bolzens (5) in dieser Lagerung (4) ausgestaltet ist.

2. Der Halter (1) der Flasche (8) nach Anspruch 1 **dadurch gekennzeichnet, dass** an der dem Bolzen (5) gegenüberliegenden Stelle an der Schelle (6) des Halters (1) ein Eintrittsspalt (7) für die Flaschenaufnahme ausgebildet ist, wobei die Größe des Eintrittsspalts (7) kleiner als der Durchmesser der Schelle (4) ist.
